# EUROPEAN PATENT APPLICATION

(11) **EP 3 355 027 A1**
(43) Date of publication of application: **01.08.2018**
(21) Application number: 16905324.6
(22) Date of filing: 14.12.2016
(51) Int. Cl.: G01C 21/26, G01C 21/32, G01C 21/30, G06F 17/30

(54) **MAP UPDATING METHOD AND VEHICLE-MOUNTED TERMINAL**

(30) Priority: 15.06.2016 CN 201610428730
(71) Applicant: Huawei Technologies Co., Ltd., Longgang District Shenzhen, Guangdong 518129 (CN)
(72) Inventor: LI, Deliang, Shenzhen Guangdong 518129 (CN)
(74) Representative: Maiwald Patent- und Rechtsanwaltsgesellschaft mbH
(86) International application number: PCT/CN2016/109793
(87) International publication number: WO 2017/215213

(57) **Abstract**

Embodiments of the present invention disclose a map update method and an in-vehicle terminal. The map update method includes: obtaining a current data record, where the current data record includes photographed current image data and recorded current positioning data; comparing the current data record with navigation map data, where the navigation map data includes map image data and map positioning track data; and updating the navigation map data according to a comparison result. The technical solutions in the embodiments of the present invention help improve intelligence and accuracy of a map update and shorten an update period.

## Description

### TECHNICAL FIELD

The present invention relates to the field of navigation technologies, and in particular, to a map update method and an in-vehicle terminal.

### BACKGROUND

With popularization of vehicles and intelligent development of an in-vehicle terminal, increasingly more people carry in-vehicle terminals such as in-vehicle navigation systems during travels, to implement map navigation in real time, so as to avoid getting lost. Currently, the following three methods for making and updating map data of a navigation system are mainly included: In a first method, field information is collected artificially, then the information is processed, and new navigation map data is generated. Collecting, making, and using data by using this method, for example, a Google Street View car, require a relatively long period. In a second method, navigation map data is obtained by using an aerial film and a satellite image map. Obtaining data by using this method is relatively complex, and this method is usually used to correct a map data error. In a third method, information about a new road fed back by a navigation user is first collected and then the feedback information is verified and processed, so as to obtain new navigation map data. For example, Waze uses Global Positioning System (GPS) information of a mobile terminal to obtain road traffic volume information, so as to provide a drive route. The new navigation map data may form a new map data version. In this method, users may feed back information with uneven quality. Consequently, it takes a large amount of time to select and identify obtained data to ensure accuracy of the information.

### SUMMARY

Embodiments of the present invention provide a map update method and an in-vehicle terminal, to improve intelligence and accuracy of a map update, and shorten an update period.

A first aspect of the embodiments of the present invention provides a map update method, including:
obtaining a current data record, where the current data record includes photographed current image data and recorded current positioning data;
comparing the current data record with navigation map data, where the navigation map data includes map image data and map positioning track data; and
updating the navigation map data according to a comparison result.

In the foregoing technical solution, an in-vehicle terminal automatically obtains the current data record, then compares the current data record with the navigation map data, and updates the navigation map data according to the comparison result, without artificial participation. Therefore, intelligence and accuracy of a map update can be improved. In addition, the entire process is an automatic processing process. Therefore, an artificial selection process is not required, and an update period can be shortened. Furthermore, in the foregoing technical solution, the current data record may be directly and locally compared with the navigation map data, so as to update local data more conveniently.

With reference to the first aspect, in a first possible implementation of the first aspect, the obtaining a current data record includes:
obtaining the current data record if it is detected that a target vehicle starts.

In the foregoing technical solution, whether the target vehicle starts is automatically detected, so as to determine whether to obtain the current data record. Therefore, processes of automatically starting an in-vehicle terminal and automatically obtaining data can be implemented, and intelligence of the in-vehicle terminal is further improved.

With reference to the first aspect, in a second possible implementation of the first aspect, before the comparing the current data record with navigation map data, the method further includes:
downloading the navigation map data from a map database server.

With reference to any one of the first aspect to the second possible implementation of the first aspect, in a third possible implementation of the first aspect, the comparing the current data record with navigation map data includes:
determining whether the current positioning data exists in the map positioning track data of the navigation map data and whether local map image data that is corresponding to the current positioning data and that is consistent with the current image data exists in the map image data of the navigation map data.

With reference to the third possible implementation of the first aspect, in a fourth possible implementation of the first aspect, the updating the navigation map data according to a comparison result includes:
if the current positioning data exists, but the local map image data does not exist, using the current image data as the local map image data, and adding the current image data to the map image data; or
if the current positioning data does not exist, adding the current positioning data to the map positioning track, using the current image data as the local map image data corresponding to the current positioning data, and adding the current image data to the map image data.

In the foregoing technical solution, different manners are selected according to different comparison results to update the navigation map data. Therefore, flexibility of a map update on an in-vehicle terminal is improved.

With reference to the fourth possible implementation of the first aspect, in a fifth possible implementation of the first aspect, the adding the current positioning data to the map positioning track includes:
linking the current positioning data to previous current positioning data, to form a new map positioning track, where the previous current data is a data record that is recorded by a GPS locator, adjacent to the current positioning data, and obtained before the current positioning data is obtained.

With reference to the fourth possible implementation of the first aspect or the fifth possible implementation of the first aspect, in a sixth possible implementation of the first aspect, after the updating the navigation map data according to a comparison result, the method further includes:
uploading updated navigation map data to the map database server, so that the map database server updates a map download version.

In the foregoing technical solution, the updated navigation map data is uploaded to the map database server. Therefore, a map operator can develop a new map download version according to the uploaded updated navigation map data, to provide a download service of the new map version for another vehicle owner.

A second aspect of the embodiments of the present invention provides an in-vehicle terminal, including:
an obtaining unit, configured to obtain a current data record, where the current data record includes photographed current image data and recorded current positioning data;
a comparison unit, configured to compare the current data record with navigation map data, where the navigation map data includes map image data and map positioning track data; and
an update unit, configured to update the navigation map data according to a comparison result.

With reference to the second aspect, in a first possible implementation of the second aspect, the obtaining unit is specifically configured to:
obtain the current data record if it is detected that a target vehicle starts.

With reference to the second aspect, in a second possible implementation of the second aspect, the in-vehicle terminal further includes:
a download unit, configured to download the navigation map data from a map database server.

With reference to any one of the second aspect to the second possible implementation of the second aspect, in a third possible implementation of the second aspect, the comparison unit is specifically configured to:
determine whether the current positioning data exists in the map positioning track data of the navigation map data and whether local map image data that is corresponding to the current positioning data and that is consistent with the current image data exists in the map image data of the navigation map data.

With reference to the third possible implementation of the second aspect, in a fourth possible implementation of the second aspect, the update unit includes:
an addition subunit, configured to: if the current positioning data exists, but the local map image data does not exist, use the current image data as the local map image data, and add the current image data to the map image data; and
a processing subunit, configured to: if the current positioning data does not exist, add the current positioning data to the map positioning track, use the current image data as the local map image data corresponding to the current positioning data, and add the current image data to the map image data.

With reference to the fourth possible implementation of the second aspect, in a fifth possible implementation of the second aspect, the addition subunit is specifically configured to:
link the current positioning data to previous current positioning data, to form a new map positioning track, where the previous current data is a data record that is recorded by the GPS locator, adjacent to the current positioning data, and obtained before the current positioning data is obtained.

With reference to the fourth possible implementation or the fifth possible implementation of the second aspect, in a sixth possible implementation of the second aspect, the in-vehicle terminal further includes:
an upload unit, configured to upload updated navigation map data to the map database server, so that the map database server updates a map download version.

A third aspect of the embodiments of the present invention provides an in-vehicle terminal, where the in-vehicle terminal includes a camera, a GPS locator, and a controller, and the controller performs the following operations:
obtaining a current data record, where the current data record includes current image data photographed by the camera and current positioning data recorded by the GPS locator;
comparing the current data record with navigation map data, where the navigation map data includes map image data and map positioning track data; and
updating the navigation map data according to a comparison result.

With reference to the third aspect, in a first possible implementation of the third aspect, the controller specifically performs the following operation:
obtaining the current data record if it is detected that a target vehicle starts.

With reference to the third aspect, in a second possible implementation of the third aspect, the controller further performs the following operation:
downloading the navigation map data from a map database server.

With reference to any one of the third aspect to the second possible implementation of the third aspect, in a third possible implementation of the third aspect, the controller specifically performs the following operation:
determining whether the current positioning data exists in the map positioning track data of the navigation map data and whether local map image data that is corresponding to the current positioning data and that is consistent with the current image data exists in the map image data of the navigation map data.

With reference to the third possible implementation of the third aspect, in a fourth possible implementation of the third aspect, the controller specifically performs the following operation:
if the current positioning data exists, but the local map image data does not exist, using the current image data as the local map image data, and adding the current image data to the map image data; or
if the current positioning data does not exist, adding the current positioning data to the map positioning track, using the current image data as the local map image data corresponding to the current positioning data, and adding the current image data to the map image data.

With reference to the fourth possible implementation of the third aspect, in a fifth possible implementation of the third aspect, the controller specifically performs the following operation:
linking the current positioning data to previous current positioning data, to form a new map positioning track, where the previous current data is a data record that is recorded by the GPS locator, adjacent to the current positioning data, and obtained before the current positioning data is obtained.

With reference to the fourth possible implementation or the fifth possible implementation of the third aspect, in a sixth possible implementation of the third aspect, the controller further performs the following operation:
uploading updated navigation map data to the map database server, so that the map database server updates a map download version.

A fourth aspect of the embodiments of the present invention provides a computer storage medium, where the computer storage medium stores a program, and when the program is executed, any step of the first aspect of the embodiments of the present invention is included.

It can be learned from the foregoing that, in the embodiments of the present invention, the current data record may be obtained, where the current data record includes the photographed current image data and the recorded current positioning data; then the current data record is compared with the navigation map data, where the navigation map data includes the map image data and the map positioning track data; and the navigation map data is updated according to the comparison result. Obtaining the current data record automatically and updating the navigation map data by using the comparison result of the current data record and the navigation map data can improve intelligence and accuracy of a map update. In addition, real-time comparison processing of current data does not require an artificial selection process and can shorten an update period.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings.
FIG. 1 is a schematic flowchart of a map update method according to an embodiment of the present invention;
FIG. 2 is a schematic flowchart of another map update method according to an embodiment of the present invention;
FIG. 3 is a schematic modular diagram of an in-vehicle terminal according to an embodiment of the present invention;
FIG. 4 is a schematic modular diagram of another in-vehicle terminal according to an embodiment of the present invention;
FIG. 5 is a schematic modular diagram of an update unit according to an embodiment of the present invention; and
FIG. 6 is a schematic structural diagram of an in-vehicle terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention shall fall within the protection scope of the present invention.

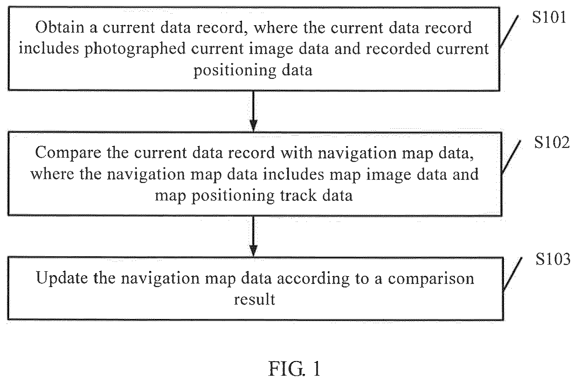

Referring to FIG. 1, FIG. 1 is a schematic flowchart of a map update method according to an embodiment of the present invention. As shown in FIG. 1, the map update method provided in this embodiment of the present invention may include steps S101 to S103.

S101. Obtain a current data record, where the current data record includes photographed current image data and recorded current positioning data.

Specifically, an in-vehicle terminal obtains the current data record. The current data record includes the photographed current image data and the recorded current positioning data. Generally, an in-vehicle terminal is a front-end device of a vehicle monitoring and management system and may include an in-vehicle navigation device, an in-vehicle video server, an external camera, a call handle, a car alarm, and the like. In this embodiment of the present invention, the in-vehicle terminal may be an electronic terminal device that has functions of photographing, positioning, network communication, navigation, and the like. The in-vehicle terminal may be fixedly installed in a vehicle, or may be used as an independent device and placed inside a vehicle. A user first starts the in-vehicle terminal and then starts the vehicle. The in-vehicle terminal may determine, by detecting acceleration or a status change of the vehicle, whether the vehicle starts. If the in-vehicle terminal detects that the target vehicle starts, the in-vehicle terminal may automatically start the photographing and positioning functions, to perform photographing and positioning on a road condition during driving, so as to obtain current data information. In this embodiment of the present invention, the in-vehicle terminal may obtain the current image data by means of photographing by using a built-in camera of the in-vehicle terminal, and record the current positioning data by using a built-in Global Positioning System (Global Positioning System, GPS) locator. The current image data may be a three-dimensional (three dimensional, 3D) reality navigation image (for example, may obtain multiple planar images by means of photographing by using the built-in camera of the terminal, and then synthesize the multiple planar images into a 3D reality navigation image). The obtained current positioning data may be latitude and longitude data or other measurable data.

S102. Compare the current data record with navigation map data, where the navigation map data includes map image data and map positioning track data.

Specifically, the in-vehicle terminal compares the current data record with the navigation map data. The navigation map data includes the map image data and the map positioning track data. In this embodiment of the present invention, the navigation map data is navigation map data, downloaded by the in-vehicle terminal from a map database server, on a map, and may include the map image data (for example, a 3D reality navigation image) and the map positioning track data. The in-vehicle terminal compares the current data record with the navigation map data, and may determine, during the comparison, whether the current positioning data exists in the map positioning track data of the navigation map data. If the current positioning data exists, the in-vehicle terminal further determines whether local map image data that is corresponding to the current positioning data and that is consistent with the current image data exists in the map image data of the navigation map data. If the local map image data does not exist, the in-vehicle terminal may perform a corresponding operation of updating the navigation map data.

S103. Update the navigation map data according to a comparison result.

Specifically, the in-vehicle terminal updates the navigation map data according to the comparison result. In this embodiment of the present invention, if the current positioning data exists in the map positioning track data of the navigation map data, the in-vehicle terminal may further determine whether the local map image data that is corresponding to the current positioning data and that is consistent with the current image data exists in the map image data of the navigation map data. If the local map image data does not exist, the in-vehicle terminal may use the current image data as the local map image data and add the current image data to the map image data. For example, if the current data record includes a 3D image 1 and a position 1, and the position 1 can be found in the navigation map data, but no image is corresponding to the position 1, the 3D image 1 may be used as local map image data corresponding to the position 1 and added to the navigation map data. If the current positioning data exists in the map positioning track data of the navigation map data, and the local map image data corresponding to the current positioning data exists, but the local map image data is inconsistent with the current image data, the in-vehicle terminal may use the current image data as new local map image data, add the current image data to the map image data, and remove the original local map image data. For example, the current data record includes the 3D image 1 and the position 1, and the position 1 and a corresponding 3D image 2 can be found in the navigation map data. The 3D image 1 may be used as new local map image data and added to the map image data, and the 3D image 2 is removed. If the current positioning data does not exist in the map positioning track data of the navigation map data, regardless of whether the local map image data exists, the in-vehicle terminal may add the current positioning data to the map positioning track, use the current image data as the local map image data corresponding to the current positioning data, and add the current image data to the map image data.

It can be learned from the foregoing that, in this embodiment of the present invention, the current data record may be obtained, where the current data record includes the photographed current image data and the recorded current positioning data; then the current data record is compared with the navigation map data, where the navigation map data includes the map image data and the map positioning track data; and the navigation map data is updated according to the comparison result. Obtaining the current data record automatically and updating the navigation map data by using the comparison result of the current data record and the navigation map data can improve intelligence and accuracy of a map update. In addition, real-time comparison processing of current data does not require an artificial selection process and can shorten an update period.

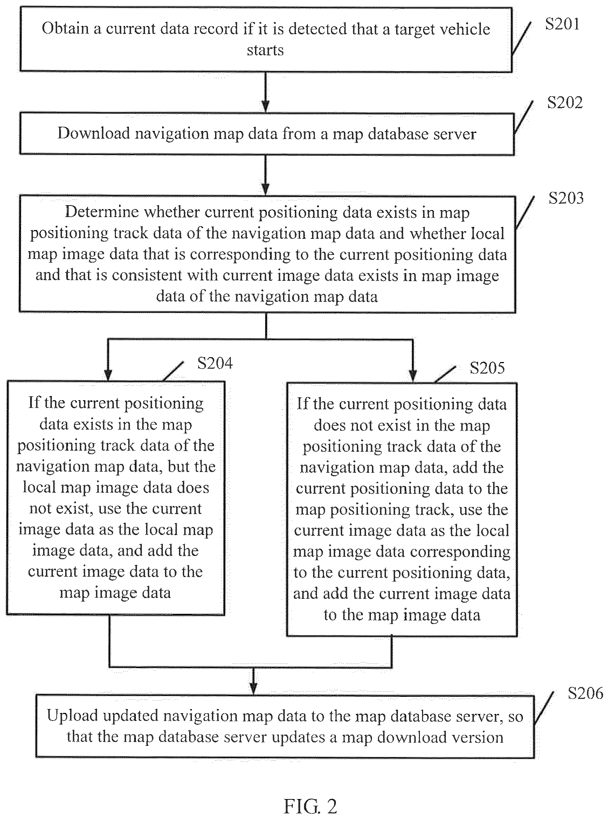

Referring to FIG. 2, FIG. 2 is a schematic flowchart of another map update method according to an embodiment of the present invention. As shown in FIG. 2, the another map update method provided in this embodiment of the present invention may include steps S201 to S206.

S201. Obtain a current data record if it is detected that a target vehicle starts, where the current data record includes photographed current image data and recorded current positioning data.

Specifically, if an in-vehicle terminal detects that the target vehicle starts, the in-vehicle terminal obtains the current data record. The current data record includes the photographed current image data and the recorded current positioning data. Generally, an in-vehicle terminal is a front-end device of a vehicle monitoring and management system and may include an in-vehicle navigation device, an in-vehicle video server, an external camera, a call handle, a car alarm, and the like. In this embodiment of the present invention, the in-vehicle terminal may be an electronic terminal device that has functions of photographing, positioning, network communication, navigation, and the like. The in-vehicle terminal may be fixedly installed in a vehicle, or may be used as an independent device and placed inside a vehicle. When a user first starts the in-vehicle terminal and then starts the target vehicle that carries the in-vehicle terminal, the in-vehicle terminal may determine, by detecting acceleration or a status change of the vehicle, whether the vehicle starts. If the in-vehicle terminal detects that the target vehicle starts, the in-vehicle terminal may automatically start the photographing and positioning functions, to perform photographing and positioning on a road condition during driving, so as to obtain current data information. In this embodiment of the present invention, the in-vehicle terminal may obtain the current image data by means of photographing by using a built-in camera of the in-vehicle terminal, and record the current positioning data by using a built-in GPS locator. The current image data may be a 3D reality navigation image (for example, may obtain multiple planar images by means of photographing by using the built-in camera of the terminal, and then synthesize the multiple planar images into a 3D reality navigation image). The obtained current positioning data may be latitude and longitude data or other measurable data. In this embodiment of the present invention, obtaining the current image data by using the camera may be synchronized with recording the current positioning data by using the GPS locator. Alternatively, either obtaining the current image data by using the camera or recording the current positioning data by using the GPS locator may be first performed.

S202. Download navigation map data from a map database server.

Specifically, the in-vehicle terminal downloads the navigation map data from the map database server. In this embodiment of the present invention, the navigation map data may be stored in the map database server. When detecting that the vehicle is to start, the in-vehicle terminal may find that the in-vehicle terminal has no navigation map data or that a current version of the navigation map data is not a latest version. In this case, the in-vehicle terminal may connect to the map database server by using a wireless network and download the navigation map data. Optionally, in a driving process of the vehicle, the in-vehicle terminal may download navigation map data in a current area range in real time according to positioning information. In another embodiment, the foregoing navigation map data may be navigation map data pre-stored in the in-vehicle terminal. Alternatively, step S202 may be obtaining navigation map data preset in the in-vehicle terminal.

S203. Determine whether the current positioning data exists in map positioning track data of the navigation map data and whether local map image data that is corresponding to the current positioning data and that is consistent with the current image data exists in map image data of the navigation map data, where the navigation map data includes the map image data and the map positioning track data.

Specifically, the in-vehicle terminal determines whether the current positioning data exists in the map positioning track data of the navigation map data and whether the local map image data that is corresponding to the current positioning data and that is consistent with the current image data exists in the map image data of the navigation map data. The navigation map data includes the map image data and the map positioning track data. In this embodiment of the present invention, the in-vehicle terminal may determine whether the current positioning data exists in the map positioning track data of the navigation map data. If the current positioning data exists, the in-vehicle terminal further determines whether the local map image data that is corresponding to the current positioning data and that is consistent with the current image data exists in the map image data of the navigation map data. For example, after reading the current positioning data, the in-vehicle terminal searches the navigation map data for the local map image data corresponding to the current positioning data. Then, the in-vehicle terminal performs a response update operation according to a determining result.

Optionally, in this embodiment of the present invention, the in-vehicle terminal may directly access the map database server in real time, and search the navigation map data in the map database server for the local map image data corresponding to the current positioning data. Then, the in-vehicle terminal performs a response update operation according to a determining result.

S204. If the current positioning data exists in the map positioning track data of the navigation map data, but the local map image data does not exist, use the current image data as the local map image data, and add the current image data to the map image data.

Specifically, if the current positioning data exists, but the local map image data does not exist, the in-vehicle terminal uses the current image data as the local map image data and adds the current image data to the map image data. In this embodiment of the present invention, if the current positioning data exists in the map positioning track data of the navigation map data, the in-vehicle terminal may further determine whether the local map image data that is corresponding to the current positioning data and that is consistent with the current image data exists in the map image data of the navigation map data. If the local map image data does not exist, the in-vehicle terminal may use the current image data as the local map image data and add the current image data to the map image data. For example, if the current data record includes a 3D image 1 and a position 1, and the position 1 can be found in the navigation map data, but no image is corresponding to the position 1, the 3D image 1 may be used as local map image data corresponding to the position 1 and added to the navigation map data.

If the current positioning data exists in the map positioning track data of the navigation map data, the in-vehicle terminal may use a series of image processing algorithms to compare an image key element of the local map image data of the navigation map data with an image key element of the current image data. (For example, the following algorithm may be used for the comparison: In a structural similarity index measurement (structural similarity index, SSIM) algorithm, a global similarity measurement index of the local map image data and a global similarity measurement index of the current image data are calculated, to implement comparison of image key elements in this embodiment of the present invention. In a speeded-up robust features (Speeded-Up Robust Features, surf) algorithm, a maximum value detection feature point of a determinant of the Hessian matrix is used, and two vectors that have a maximum inner product are used as a best-matched point, to implement comparison of image key elements in this embodiment of the present invention. A peak signal to noise ratio (Peak Signal to Noise Ratio, PSNR) algorithm is usually used to evaluate quality of a compressed image compared with an original image. In this embodiment of the present invention, the current image data may be used to calculate a mean square error, and a PSNR value is further calculated, to implement comparison of image key elements in this embodiment of the present invention. In a scale-invariant feature transform (Scale-invariant feature transform, SIFT) algorithm, a spatial scale is searched for an extreme point, a location, a scale, and a rotation-invariant of the extreme point are extracted to obtain a feature point, and image feature point matching is performed, to implement comparison of image key elements in this embodiment of the present invention.) If the local map image data corresponding to the current positioning data exists, but the local map image data is inconsistent with the current image data, the in-vehicle terminal may use the current image data as new local map image data, add the current image data to the map image data, and remove the original local map image data. For example, the current data record includes the 3D image 1 and the position 1, and the position 1 and a corresponding 3D image 2 can be found in the navigation map data. The 3D image 1 may be used as new local map image data and added to the map image data, and the 3D image 2 is removed. Then, the in-vehicle terminal continues to obtain a next current data record. The next current data record includes current image data photographed by using the camera and current positioning data obtained by positioning by the GPS. If the local map image data is consistent with the current image data, the in-vehicle terminal does not need to use the current data record to update the navigation map data. Then, the in-vehicle terminal continues to obtain a next current data record. The next current data record includes current image data photographed by using the camera and current positioning data obtained by positioning by the GPS.

S205. If the current positioning data does not exist in the map positioning track data of the navigation map data, add the current positioning data to the map positioning track, use the current image data as the local map image data corresponding to the current positioning data, and add the current image data to the map image data.

Specifically, if the current positioning data does not exist, the in-vehicle terminal adds the current positioning data to the map positioning track, uses the current image data as the local map image data corresponding to the current positioning data, and adds the current image data to the map image data. In this embodiment of the present invention, if the current positioning data does not exist in the map positioning track data of the navigation map data, regardless of whether the local map image data exists, a current location may be considered as a newly developed road or as an area not covered by existing navigation data. Therefore, the in-vehicle terminal may add the current positioning data to the map positioning track, use the current image data as the local map image data corresponding to the current positioning data, and add the current image data to the map image data. Specifically, the in-vehicle terminal may link the current positioning data to previous GPS location information, to form new map positioning track data, and then use the current image data as the local map image data corresponding to the current positioning data and synthesize the current image data into the new map positioning track data, to form new navigation map data.

For example, the current data record includes the 3D image 1 and the position 1. If the position 1 cannot be found in the navigation map data, a position A previous to a current position may be searched from the map image data, and the position 1 is linked to new map positioning track data formed according to the position A. Then, the 3D image 1 is synthesized into the map positioning track data, to form new navigation map data. Then, the in-vehicle terminal continues to obtain a next current data record. The next current data record includes current image data photographed by using the camera and current positioning data obtained by positioning by the GPS.

S206. Upload updated navigation map data to the map database server, so that the map database server updates a map download version.

Specifically, the in-vehicle terminal uploads the updated navigation map data to the map database server, so that the map database server updates the map download version. In this embodiment of the present invention, the in-vehicle terminal uploads the new navigation map data to the map database server according to a preset protocol. A map operator obtains the new navigation map data by using the map database server, and performs summarizing, filtering, analysis, processing, synthesizing, editing, and the like on the new navigation map data and the existing navigation map data, to form a new navigation map data version. The map operator notifies another in-vehicle terminal of the new navigation map data version, so that another vehicle owner upgrades an in-vehicle terminal of the vehicle owner.

It can be learned that, in this embodiment of the present invention, if it is detected that the target vehicle starts, the current data record is obtained; it is determined whether the current positioning data exists in the map positioning track data of the navigation map data and whether the local map image data that is corresponding to the current positioning data and that is consistent with the current image data exists in the map image data of the navigation map data; and the navigation map data is updated according to the determining result and the updated navigation map data is uploaded to the map database server. In this embodiment of the present invention, the current data record is obtained automatically and compared with corresponding data of the navigation map data for determining, so as to determine whether to update the navigation map data and a specific update manner. This can improve intelligence and accuracy of a map update and does not require an artificial selection process, and can save comparison data uploading time and improve map update efficiency.

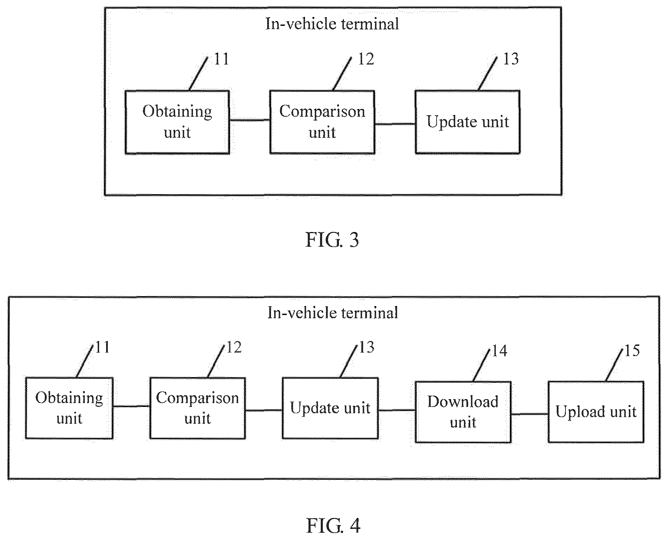

Referring to FIG. 3, FIG. 3 is a schematic modular diagram of an in-vehicle terminal according to an embodiment of the present invention. As shown in FIG. 3, the in-vehicle terminal may include an obtaining unit 11, a comparison unit 12, and an update unit 13.

The obtaining unit 11 is configured to obtain a current data record, where the current data record includes photographed current image data and recorded current positioning data.

Specifically, the obtaining unit 11 obtains the current data record. The current data record includes the photographed current image data and the recorded current positioning data. In this embodiment of the present invention, the obtaining unit 11 may automatically start photographing and positioning functions, to perform photographing and positioning on a road condition during driving, so as to obtain current data information. In this embodiment of the present invention, the obtaining unit 11 may obtain the current image data by means of photographing by using a built-in camera of the in-vehicle terminal, and record the current positioning data by using a built-in GPS locator. The current image data may be a 3D reality navigation image. The obtained current positioning data may be latitude and longitude data or other measurable data.

The comparison unit 12 is configured to compare the current data record with navigation map data, where the navigation map data includes map image data and map positioning track data.

Specifically, the comparison unit 12 compares the current data record with the navigation map data. The navigation map data includes the map image data and the map positioning track data. In this embodiment of the present invention, the navigation map data is navigation map data, downloaded by the in-vehicle terminal from a map database server, on a map, and may include the map image data, that is, a 3D reality navigation image, and the map positioning track data. The comparison unit 12 compares the current data record with the navigation map data, and may determine, during the comparison, whether the current positioning data exists in the map positioning track data of the navigation map data. If the current positioning data exists, the comparison unit 12 further determines whether local map image data that is corresponding to the current positioning data and that is consistent with the current image data exists in the map image data of the navigation map data. If the local map image data does not exist, a corresponding operation of updating the navigation map data may be performed.

The update unit 13 is configured to update the navigation map data according to a comparison result.

Specifically, the update unit 13 updates the navigation map data according to the comparison result. In this embodiment of the present invention, if the current positioning data exists in the map positioning track data of the navigation map data, the comparison unit 12 may further determine whether the local map image data that is corresponding to the current positioning data and that is consistent with the current image data exists in the map image data of the navigation map data. If the local map image data does not exist, the update unit 13 may use the current image data as the local map image data and add the current image data to the map image data. For example, if the current data record includes a 3D image 1 and a position 1, and the position 1 can be found in the navigation map data, but no image is corresponding to the position 1, the 3D image 1 may be used as local map image data corresponding to the position 1 and added to the navigation map data. If the current positioning data exists in the map positioning track data of the navigation map data, and the local map image data corresponding to the current positioning data exists, but the local map image data is inconsistent with the current image data, the update unit 13 may use the current image data as new local map image data, add the current image data to the map image data, and remove the original local map image data. For example, the current data record includes the 3D image 1 and the position 1, and the position 1 and a corresponding 3D image 2 can be found in the navigation map data. The 3D image 1 may be used as new local map image data and added to the map image data, and the 3D image 2 is removed. If the current positioning data does not exist in the map positioning track data of the navigation map data, regardless of whether the local map image data exists, the update unit 13 may add the current positioning data to the map positioning track, use the current image data as the local map image data corresponding to the current positioning data, and add the current image data to the map image data.

It can be learned from the foregoing that, in this embodiment of the present invention, the current data record may be obtained, where the current data record includes the photographed current image data and the recorded current positioning data; then the current data record is compared with the navigation map data, where the navigation map data includes the map image data and the map positioning track data; and the navigation map data is updated according to the comparison result. Obtaining the current data record automatically and updating the navigation map data by using the comparison result of the current data record and the navigation map data can improve intelligence and accuracy of a map update. In addition, real-time comparison processing of current data does not require an artificial selection process and can shorten an update period.

Referring to FIG. 4, FIG. 4 is a schematic modular diagram of another in-vehicle terminal according to an embodiment of the present invention. As shown in FIG. 4, the in-vehicle terminal may include an obtaining unit 11, a comparison unit 12, an update unit 13, a download unit 14, and an upload unit 15.

The obtaining unit 11 is configured to obtain a current data record if it is detected that a target vehicle starts, where the current data record includes photographed current image data and recorded current positioning data.

Specifically, if detecting that the target vehicle starts, the obtaining unit 11 obtains the current data record. The current data record includes the photographed current image data and the recorded current positioning data. When a user starts the target vehicle, the obtaining unit 11 may determine, by detecting acceleration or a status change of the vehicle, whether the vehicle starts. If detecting that the target vehicle starts, the obtaining unit 11 may automatically start photographing and positioning functions, to perform photographing and positioning on a road condition during driving, so as to obtain current data information. In this embodiment of the present invention, the obtaining unit 11 may obtain the current image data by means of photographing by using a built-in camera of the in-vehicle terminal, and record the current positioning data by using a built-in GPS locator. The current image data may be a 3D reality navigation image. The obtained current positioning data may be latitude and longitude data or other measurable data. In this embodiment of the present invention, obtaining the current image data by using the camera may be synchronized with recording the current positioning data by using the GPS locator. Alternatively, either obtaining the current image data by using the camera or recording the current positioning data by using the GPS locator may be first performed.

The download unit 14 is configured to download navigation map data from a map database server.

Specifically, the download unit 14 downloads the navigation map data from the map database server. In this embodiment of the present invention, the navigation map data is stored in the map database server. If the in-vehicle terminal has no navigation map data or a current version of the navigation map data is not a latest version, the download unit 14 may connect to the map database server by using a wireless network and download the navigation map data.

The comparison unit 12 is configured to determine whether the current positioning data exists in map positioning track data of the navigation map data and whether local map image data that is corresponding to the current positioning data and that is consistent with the current image data exists in map image data of the navigation map data, where the navigation map data includes the map image data and the map positioning track data.

Specifically, the comparison unit 12 determines whether the current positioning data exists in the map positioning track data of the navigation map data and whether the local map image data that is corresponding to the current positioning data and that is consistent with the current image data exists in the map image data of the navigation map data. The navigation map data includes the map image data and the map positioning track data. In this embodiment of the present invention, the comparison unit 12 may determine whether the current positioning data exists in the map positioning track data of the navigation map data. If the current positioning data exists, the comparison unit 12 further determines whether the local map image data that is corresponding to the current positioning data and that is consistent with the current image data exists in the map image data of the navigation map data. For example, after reading the current positioning data, the comparison unit 12 searches the navigation map data for the local map image data corresponding to the current positioning data. Then, a response update operation is performed according to a determining result.

Optionally, in this embodiment of the present invention, the comparison unit 12 may directly access the map database server in real time, and search the navigation map data in the map database server for the local map image data corresponding to the current positioning data. Then, a response update operation is performed according to a determining result.

The update unit 13 is configured to update the navigation map data according to a comparison result.

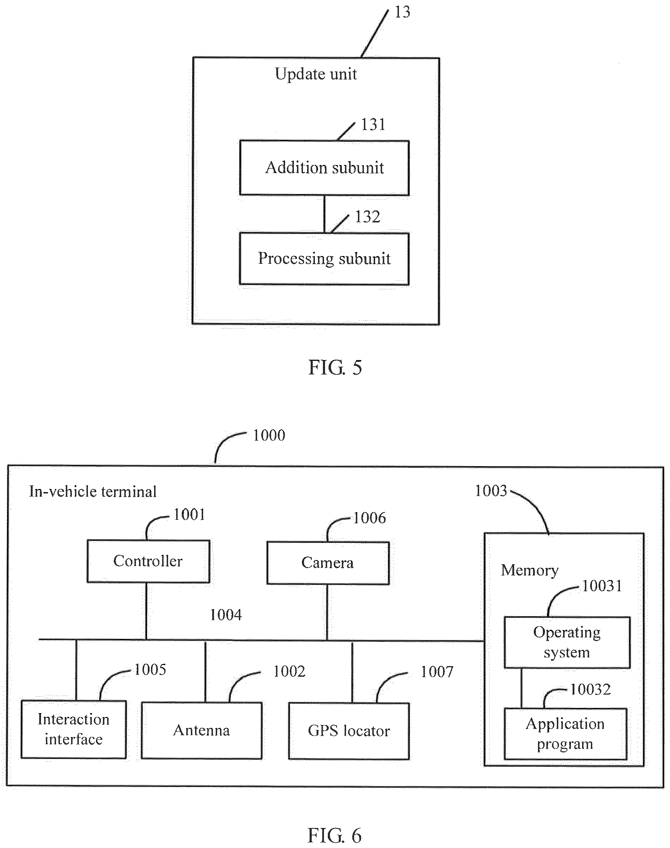

Specifically, as shown in FIG. 5, the update unit 13 includes an addition subunit 131 and a processing subunit 132.

The addition subunit 131 is configured to: if the current positioning data exists in the map positioning track data of the navigation map data, but the local map image data does not exist, use the current image data as the local map image data, and add the current image data to the map image data.

Specifically, if the current positioning data exists, but the local map image data does not exist, the addition subunit 131 uses the current image data as the local map image data and adds the current image data to the map image data. In this embodiment of the present invention, if the current positioning data exists in the map positioning track data of the navigation map data, the addition subunit 131 may further determine whether the local map image data that is corresponding to the current positioning data and that is consistent with the current image data exists in the map image data of the navigation map data. If the local map image data does not exist, the addition subunit 131 may use the current image data as the local map image data and add the current image data to the map image data. For example, if the current data record includes a 3D image 1 and a position 1, and the position 1 can be found in the navigation map data, but no image is corresponding to the position 1, the 3D image 1 may be used as local map image data corresponding to the position 1 and added to the navigation map data.

If the current positioning data exists in the map positioning track data of the navigation map data, the addition subunit 131 may use a series of image processing algorithms to compare an image key element of the local map image data of the navigation map data with an image key element of the current image data. If the local map image data corresponding to the current positioning data exists, but the local map image data is inconsistent with the current image data, the addition subunit 131 may use the current image data as new local map image data, add the current image data to the map image data, and remove the original local map image data. For example, the current data record includes the 3D image 1 and the position 1, and the position 1 and a corresponding 3D image 2 can be found in the navigation map data. The 3D image 1 may be used as new local map image data and added to the map image data, and the 3D image 2 is removed. Then, the in-vehicle terminal continues to obtain a next current data record. The next current data record includes current image data photographed by using the camera and current positioning data obtained by positioning by the GPS. If the local map image data is consistent with the current image data, the in-vehicle terminal does not need to use the current data record to update the navigation map data. Then, the in-vehicle terminal continues to obtain a next current data record. The next current data record includes current image data photographed by using the camera and current positioning data obtained by positioning by the GPS.

The processing subunit 132 is configured to: if the current positioning data does not exist in the map positioning track data of the navigation map data, add the current positioning data to the map positioning track, use the current image data as the local map image data corresponding to the current positioning data, and add the current image data to the map image data.

Specifically, if the current positioning data does not exist, the processing subunit 132 adds the current positioning data to the map positioning track, uses the current image data as the local map image data corresponding to the current positioning data, and adds the current image data to the map image data. In this embodiment of the present invention, if the current positioning data does not exist in the map positioning track data of the navigation map data, regardless of whether the local map image data exists, a current location may be considered as a newly developed road or as an area not covered by existing navigation data. Therefore, the processing subunit 132 may add the current positioning data to the map positioning track, use the current image data as the local map image data corresponding to the current positioning data, and add the current image data to the map image data. Specifically, the in-vehicle terminal may link the current positioning data to previous GPS location information, to form new map positioning track data, and then use the current image data as the local map image data corresponding to the current positioning data and synthesize the current image data into the new map positioning track data, to form new navigation map data.

For example, the current data record includes the 3D image 1 and the position 1. If the position 1 cannot be found in the navigation map data, a position A previous to a current position may be searched from the map image data, and the position 1 is linked to new map positioning track data formed according to the position A. Then, the 3D image 1 is synthesized into the map positioning track data, to form new navigation map data. Then, the in-vehicle terminal continues to obtain a next current data record. The next current data record includes current image data photographed by using the camera and current positioning data obtained by positioning by the GPS.

The upload unit 15 is configured to upload updated navigation map data to the map database server, so that the map database server updates a map download version.

Specifically, the upload unit 15 uploads the updated navigation map data to the map database server, so that the map database server updates the map download version. In this embodiment of the present invention, the upload unit 15 uploads the new navigation map data to the map database server according to a preset protocol. A map operator obtains the new navigation map data by using the map database server, and performs summarizing, filtering, analysis, processing, synthesizing, editing, and the like on the new navigation map data and the existing navigation map data, to form a new navigation map data version. The map operator notifies another in-vehicle terminal of the new navigation map data version, so that another vehicle owner upgrades an in-vehicle terminal of the vehicle owner.

It can be learned that, in this embodiment of the present invention, if it is detected that the target vehicle starts, the current data record is obtained; it is determined whether the current positioning data exists in the map positioning track data of the navigation map data and whether the local map image data that is corresponding to the current positioning data and that is consistent with the current image data exists in the map image data of the navigation map data; and the navigation map data is updated according to the determining result and the updated navigation map data is uploaded to the map database server. In this embodiment of the present invention, the current data record is obtained automatically and compared with corresponding data of the navigation map data for determining, so as to determine whether to update the navigation map data and a specific update manner. This can improve intelligence and accuracy of a map update and does not require an artificial selection process, and can save comparison data uploading time and improve map update efficiency.

Referring to FIG. 6, FIG. 6 shows an in-vehicle terminal used in an embodiment of the present invention. Referring to FIG. 6, FIG. 6 is a schematic structural diagram of an in-vehicle terminal 1000 disclosed in this embodiment of the present invention. As shown in FIG. 6, the in-vehicle terminal 1000 may include at least one controller 1001 such as a CPU, at least one antenna 1002, a memory 1003, at least one communications bus 1004, an interaction interface 1005, a camera 1006, and a GPS locator 1007. The communications bus 1004 is configured to implement connection and communication between these components. The antenna 1002 may be configured to send and receive information data. The memory 1003 may include a high-speed RAM memory, or may further include a non-volatile memory (non-volatile memory), for example, at least one magnetic disk memory. Optionally, the memory 1003 may include at least one in-vehicle storage terminal that is located far away from the foregoing controller 1001. The camera 1006 is configured to photograph current image data. The GPS locator 1007 is configured to record current positioning data.

In some implementations, the memory 1003 stores the following elements: an executable module or a data structure, or a subset thereof, or an extended set thereof:
an operating system 10031, including various system programs, and used to implement various basic services and process a hardware-based task; and
an application program 10032, including various application programs such as a device control service program and a device identification service program, and used to implement various application services.

In some implementations, the interaction interface 1005 may be used for information input and output and may include a display 10051 and a keyboard 10052.

Specifically, the controller 1001 is configured to invoke a program stored in the memory 1003, to perform the following operations:
obtaining a current data record, where the current data record includes current image data photographed by the camera and current positioning data recorded by the GPS locator;
comparing the current data record with navigation map data, where the navigation map data includes map image data and map positioning track data; and
updating the navigation map data according to a comparison result.

In an embodiment, the controller 1001 invokes a program stored in the memory 1003, to specifically perform the following operation:
obtaining the current data record if it is detected that a target vehicle starts.

In an embodiment, the controller 1001 invokes a program stored in the memory 1003, to further perform the following operation:
downloading the navigation map data from a map database server.

In an embodiment, the controller 1001 invokes a program stored in the memory 1003, to specifically perform the following operation:
determining whether the current positioning data exists in the map positioning track data of the navigation map data and whether local map image data that is corresponding to the current positioning data and that is consistent with the current image data exists in the map image data of the navigation map data.

In an embodiment, the controller 1001 invokes a program stored in the memory 1003, to specifically perform the following operation:
if the current positioning data exists in the map positioning track data of the navigation map data, but the local map image data does not exist, using the current image data as the local map image data, and adding the current image data to the map image data; or
if the current positioning data does not exist in the map positioning track data of the navigation map data, adding the current positioning data to the map positioning track, using the current image data as the local map image data corresponding to the current positioning data, and adding the current image data to the map image data.

In an embodiment, the controller 1001 invokes a program stored in the memory 1003, to specifically perform the following operation:
linking the current positioning data to previous current positioning data, to form a new map positioning track, where the previous current data is a data record that is recorded by the GPS locator, adjacent to the current positioning data, and obtained before the current positioning data is obtained.

In an embodiment, the controller 1001 invokes a program stored in the memory 1003, to further perform the following operation:
uploading updated navigation map data to the map database server, so that the map database server updates a map download version.

It can be learned from the foregoing that, in this embodiment of the present invention, the current data record may be obtained, where the current data record includes the photographed current image data and the recorded current positioning data; then the current data record is compared with the navigation map data, where the navigation map data includes the map image data and the map positioning track data; and the navigation map data is updated according to the comparison result. Obtaining the current data record automatically and updating the navigation map data by using the comparison result of the current data record and the navigation map data can improve intelligence and accuracy of a map update. In addition, real-time comparison processing of current data does not require an artificial selection process and can shorten an update period.

An embodiment of the present invention further provides a computer readable storage medium storing one or more programs. The one or more programs include an instruction. When an in-vehicle terminal including multiple application programs executes the instruction, the instruction is used to enable the in-vehicle terminal to perform the foregoing methods in FIG. 1 and FIG. 2.

A person of ordinary skill in the art may understand that all or some of the steps of the methods in the embodiments may be implemented by a program instructing relevant hardware. The program may be stored in a computer readable storage medium. The storage medium may include a flash memory, a read-only memory (Read-Only Memory, ROM), a random access memory (Random Access Memory, RAM), a magnetic disk, and an optical disk.

What is disclosed above is merely embodiments of the present invention, and certainly is not intended to limit the scope of the claims of the present invention. Therefore, equivalent variations made in accordance with the claims of the present invention shall fall within the scope of the present invention.

## Claims

1. A map update method, comprising:
obtaining a current data record, wherein the current data record comprises photographed current image data and recorded current positioning data;
comparing the current data record with navigation map data, wherein the navigation map data comprises map image data and map positioning track data; and
updating the navigation map data according to a comparison result.

2. The method according to claim 1, wherein the obtaining a current data record comprises:
obtaining the current data record if it is detected that a target vehicle starts.

3. The method according to claim 1, before the comparing the current data record with navigation map data, further comprising:
downloading the navigation map data from a map database server.

4. The method according to any one of claims 1 to 3, wherein the comparing the current data record with navigation map data comprises:
determining whether the current positioning data exists in the map positioning track data of the navigation map data and whether local map image data that is corresponding to the current positioning data and that is consistent with the current image data exists in the map image data of the navigation map data.

5. The method according to claim 4, wherein the updating the navigation map data according to a comparison result comprises:
if the current positioning data exists in the map positioning track data of the navigation map data, but the local map image data does not exist, using the current image data as the local map image data, and adding the current image data to the map image data; or
if the current positioning data does not exist in the map positioning track data of the navigation map data, adding the current positioning data to the map positioning track, using the current image data as the local map image data corresponding to the current positioning data, and adding the current image data to the map image data.

6. The method according to claim 5, wherein the adding the current positioning data to the map positioning track comprises:
linking the current positioning data to previous current positioning data, to form a new map positioning track, wherein the previous current positioning data is a data record that is recorded by GPS locator, adjacent to the current positioning data, and obtained before the current positioning data is obtained.

7. The method according to claim 5 or 6, after the updating the navigation map data according to a comparison result, further comprising:
uploading updated navigation map data to the map database server, so that the map database server updates a map download version.

8. An in-vehicle terminal, comprising:
an obtaining unit, configured to obtain a current data record, wherein the current data record comprises photographed current image data and recorded current positioning data;
a comparison unit, configured to compare the current data record with navigation map data, wherein the navigation map data comprises map image data and map positioning track data; and
an update unit, configured to update the navigation map data according to a comparison result.

9. The in-vehicle terminal according to claim 8, wherein the obtaining unit is specifically configured to:
obtain the current data record if it is detected that a target vehicle starts.

10. The in-vehicle terminal according to claim 8, further comprising:
a download unit, configured to download the navigation map data from a map database server.

11. The in-vehicle terminal according to any one of claims 8 to 10, wherein the comparison unit is specifically configured to:
determine whether the current positioning data exists in the map positioning track data of the navigation map data and whether local map image data that is corresponding to the current positioning data and that is consistent with the current image data exists in the map image data of the navigation map data.

12. The in-vehicle terminal according to claim 11, wherein the update unit comprises:
an addition subunit, configured to: if the current positioning data exists in the map positioning track data of the navigation map data, but the local map image data does not exist, use the current image data as the local map image data, and add the current image data to the map image data; and
a processing subunit, configured to: if the current positioning data does not exist in the map positioning track data of the navigation map data, add the current positioning data to the map positioning track, use the current image data as the local map image data corresponding to the current positioning data, and add the current image data to the map image data.

13. The in-vehicle terminal according to claim 12, wherein the addition subunit is specifically configured to:
link the current positioning data to previous current positioning data, to form a new map positioning track, wherein the previous current data is a data record that is recorded by the GPS locator, adjacent to the current positioning data, and obtained before the current positioning data is obtained.

14. The in-vehicle terminal according to claim 12 or 13, further comprising:
an upload unit, configured to upload updated navigation map data to the map database server, so that the map database server updates a map download version.

15. An in-vehicle terminal, wherein the in-vehicle terminal comprises a camera, a GPS locator, and a controller, and the controller performs the following operations:
obtaining a current data record, wherein the current data record comprises current image data photographed by the camera and current positioning data recorded by the GPS locator;
comparing the current data record with navigation map data, wherein the navigation map data comprises map image data and map positioning track data; and
updating the navigation map data according to a comparison result.

16. The in-vehicle terminal according to claim 15, wherein the controller specifically performs the following operation:
obtaining the current data record if it is detected that a target vehicle starts.

17. The in-vehicle terminal according to claim 15, wherein the controller further performs the following operation:
downloading the navigation map data from a map database server.

18. The in-vehicle terminal according to any one of claims 15 to 17, wherein the controller specifically performs the following operation:
determining whether the current positioning data exists in the map positioning track data of the navigation map data and whether local map image data that is corresponding to the current positioning data and that is consistent with the current image data exists in the map image data of the navigation map data.

19. The in-vehicle terminal according to claim 18, wherein the controller specifically performs the following operation:
if the current positioning data exists, but the local map image data does not exist, using the current image data as the local map image data, and adding the current image data to the map image data; or
if the current positioning data does not exist, adding the current positioning data to the map positioning track, using the current image data as the local map image data corresponding to the current positioning data, and adding the current image data to the map image data.

20. The in-vehicle terminal according to claim 19, wherein the controller specifically performs the following operation:
linking the current positioning data to previous current positioning data, to form a new map positioning track, wherein the previous current data is a data record that is recorded by the GPS locator, adjacent to the current positioning data, and obtained before the current positioning data is obtained.

21. The in-vehicle terminal according to claim 19 or 20, wherein the controller further performs the following operation:
uploading updated navigation map data to the map database server, so that the map database server updates a map download version.

22. A computer storage medium, wherein the computer storage medium stores a program, and when the program is executed, the step according to any one of claims 1 to 7 is comprised.
